(19) Europäisches Patentamt
European Patent Office
Office européen des brevets

(11) Veröffentlichungsnummer: **0 261 492 B1**

(12) **EUROPÄISCHE PATENTSCHRIFT**

(45) Veröffentlichungstag der Patentschrift: **06.12.95**

(51) Int. Cl.[6]: **A01N 25/04**, A01N 25/30

(21) Anmeldenummer: **87113082.9**

(22) Anmeldetag: **08.09.87**

Die Akte enthält technische Angaben, die nach dem Eingang der Anmeldung eingereicht wurden und die nicht in dieser Patentschrift enthalten sind.

(54) **Neue Suspoemulsionen von Pflanzenschutz-Wirkstoffen.**

(30) Priorität: **17.09.86 DE 3631558**

(43) Veröffentlichungstag der Anmeldung: **30.03.88 Patentblatt 88/13**

(45) Bekanntmachung des Hinweises auf die Patenterteilung: **06.12.95 Patentblatt 95/49**

(84) Benannte Vertragsstaaten: **AT BE CH DE ES FR GB IT LI NL SE**

(56) Entgegenhaltungen:
**EP-A- 0 017 001**
**EP-A- 0 088 049**
**EP-A- 0 089 268**
**EP-A- 0 143 099**
**DE-A- 1 811 630**
**DE-A- 3 302 648**

(73) Patentinhaber: **Hoechst Schering AgrEvo GmbH**
**Gerichtstrasse 27**
**D-13342 Berlin (DE)**

(72) Erfinder: **Frisch, Gerhard, Dr.**
**Westerwaldstrasse 7**
**D-6393 Wehrheim (DE)**
Erfinder: **Albrecht, Konrad, Dr.**
**Sodener Strasse 64**
**D-6233 Kelkheim (Taunus) (DE)**

**EP 0 261 492 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Unter Suspoemulsionen versteht man im allgemeinen Formulierungen mit mindestens drei verschiedenen Phasen, einer wäßrigen, organischen und festen Phase. Wasser kann als Trägerphase fungieren, in die ein oder mehrere Wirkstoffe als feste Phase fein dispergiert sind; als dritte Phase enthält die Suspoemulsion dann eine organische Lösungsmittelphase, worin ein oder mehrere Wirkstoffe in emulgierter Form vorliegen (EP-A-117 999, EP-A-142 485). Prinzipiell können in der wäßrigen Phase auch noch wasserlösliche Wirkstoff gelöst sein.

Die in EP-A-177 999 beschriebenen Formulierungen sind lagerstabil und anwendungstechnisch einwandfrei; sie können jedoch bei starker Einwirkung von hohen Scherkräften über einen längeren Zeitraum eine sehr feine Tröpfchenverteilung bekommen, die zu hohen Viskositäten der Fertigformulierung führen kann. Des weiteren gibt es bestimmte Wirkstoffkombinationen neuerer Art, die sich nur bedingt nach dem dort beschriebenen Verfahren herstellen lassen.

In EP-A-142 485 wird ausdrücklich darauf hingewiesen, daß in der organischen Phase Kristallbildung auftreten kann und daß die Lagerstabilität nur für 1 Monat bei höherer Temperatur gegeben ist. Daher bestand die Aufgabe, neue Suspoemulsionen mit verbesserten anwendungstechnischen Eigenschaften zu entwickeln.

Aus EP-A-143 099 sind organische Lösungsmittel enthaltende Suspoemulsionen von Atrazin und Alachlor bekannt, die eine Emulgatorkombination aus einem Blockpolymer und einem ionischen Emulgator enthalten.

In EP-A-17001 werden wäßrige Suspensionen von herbiziden Wirkstoffkombinationen beschrieben, die als Dispergiermittel das Natriumsalz eines Phenolsulfonsäure-Harnstoff-Formaldehyd-Kondensationsprodukts sowie ein Blockpolymerisat enthalten.

Es wurde nun überraschenderweise gefunden, daß Suspoemulsionen mit einem oder vor allem mehreren Wirkstoffen, deren organische Phase als Tenside Ethylenoxid-Propylenoxid-Blockpolymere oder ethoxylierte Polyarylphenolverbindungen enthält, vorteilhafte Eigenschaften besitzen. Obwohl sie sehr kleine Tröpfchen enthalten, bleiben sie sehr gut fließfähig, neigen nicht zur Kristallbildung und sind lagerstabil. Außerdem können diese Suspoemulsionen auch in ULV-Form (Ultra Low Volume) ausgebracht werden (Winnacker, Küchler: Chemische Technologie, Bd. 7, Org. Techn. III, Carl Hanser Verlag München-Wien (1986) S. 322 ff.)

Die Erfindung betrifft daher Pflanzenschutzmittel auf der Basis wäßrige und organische Phasen enthaltender Suspoemulsionen mit mindestens zwei Wirkstoffen, deren organische Phase mindestens ein Lösungsmittel ausgewählt aus der aus aromatischen Kohlenwasserstoffen, ($C_6$-$C_{16}$)-Aromatengemischen, nicht wassermischbaren Ketonen, substituierten Aromaten und ($C_1$-$C_{16}$)-Phthalsäureestern bestehenden Gruppe,
als Tenside Ethylenoxid-Blockpolymere der Formeln I oder II

$$RO\text{-}(CH_2\text{-}CH_2\text{-}O)_x\text{-}(\underset{\displaystyle CH_3}{\underset{|}{C}H}\text{-}CH_2\text{-}O)_z\text{-}R \qquad (I)$$

$$RO\text{-}(CH_2\text{-}CH_2\text{-}O)_x\text{-}(\underset{\displaystyle CH_3}{\underset{|}{C}H}\text{-}CH_2\text{-}O)_y\text{-}(CH_2\text{-}CH_2\text{-}O)_z\text{-}R \qquad (II)$$

mit einem Molgewicht von 1000-20000, wobei jeweils x, y und z unabhängig voneinander eine Zahl von 2-2000 und R = H oder ($C_1$-$C_{10}$)-Alkyl bedeuten, oder trityrylsubstituierte Phenole mit 15-30 Mol EO und als Wirkstoff mindestens einen in organischen Lösungsmitteln löslichen Wirkstoff aus der Gruppe der Phenylharnstoffderivate, der Anilinderivate, der Phosphorsäureester, der (Hetero-)aryloxyphenoxyester, der substituierten Phenoxyessig(propion)-säuren oder -ester, der fungiziden Triazole, der Pyrethroide, der Imidazolcarboxamide, der 3,5-Dihalogen-4-hydroxybenzonitrile, der Phenolderivate, Ethyl-[3-(2-Chlor-4-trifluormethylphenoxy)-6-nitrobenzoyloxy]-acetat, N-[3-(1-Ethyl-1-methylpropyl)-5-isoxazolyl]-2,6-dimethoxybenzamidsäureester, [4-Amino-3,5-dichlor-6-fluor-2-pyridin]-oxyessigsäureester enthält und deren wäßrige Phase ein Phenylharnstoffderivat aus der Gruppe Linuron, Isoproturon, Diuron und Chlortoluron oder ein Gemisch

derselben enthält.

Als Blockpolymere kommen beispielsweise HOE S 3510 (Formel I) oder HOE S 1816 (Formel II) der Hoechst AG in Frage. Als tristyrylsubstituierte Phenole mit 15-30 Mol Ethylenoxid (EO) sind z.B. HOE S 3474 (Hoechst AG) oder ®Soprophor BSU (Rhône Poulenc) geeignet.

Im allgemeinen enthalten die Suspoemulsionen zwei Wirkstoffe.

Als Wirkstoffe der organischen Phase werden eingesetzt: 3,5-Dihalogen-4-hydroxybenzonitrile, ihre Ester und Salze wie Bromoxyniloctanoat und Ioxyniloctanoat; substituierte Phenoxyessig(propion)-Säuren und -Ester wie Mecoprop, 2,4-D-Ester, MCPA; (Hetero-)Aryloxy-phenoxyester wie Fluazifop, Fenoxapropethyl, Diclofop-methyl; Phosphorsäureester wie Pyrazophos; fungizide Triazole wie Propiconazol; Pyrethroide wie Deltamethrin; Anilinderivate wie Pendimethalin, Trifluralin, Alachlor, Metolachlor; Imidazolcarboxamide wie z.B. Prochloraz, Phenylharnstoffderivate wie Monolinuron; Ethyl-[3-(2-chlor-4-trifluormethyl-phenoxy)-6-nitro-benzoyl-oxy]-acetat (RH 8301); N-[3-(1-Ethyl-1-methylpropyl)-5-isoxazolyl]-2,6-dimethoxybenzamid (EL 107); [4-Amino-3,5-dichlor-6-fluor-2-pyridin]oxyessigsäureester, insbesondere der -Isooctylester (Fluroxypyr) oder Phenolderivate wie z.B. Dinoseb oder Dinoseb-acetat.

Als Lösungsmittel für die organische Phase kommen in Frage aromatische Kohlenwasserstoffe, wie z.B. Xylol, Toluol und 1/2-Methylnaphthalin; ($C_6$-$C_{16}$)-Aromatengemische, wie die ^(R)Solvesso-Reihe mit den Typen 100, 150, 200; nicht wassermischbare Ketone wie z.B. Isophoron oder substituierte Aromaten, wie z.B. halogenierte Aromaten. Diesen Lösungsmitteln können als Lösungsvermittler noch ($C_1$-$C_{12}$)-Phthalsäureester zugemischt sein; letztere können diese auch ganz ersetzen.

Linuron, Isoproturon, Diuron oder Chlortoluron werden als Fertigformulierungen mit den üblichen Formulierungshilfsmitteln, wie sie z.B. in EP-A 22 925, EP-A 110 174 und der deutschen Patentanmeldung P 35 38 247.3 beschrieben sind, eingesetzt.

Die wäßrige Phase kann folgende Dispergiermittel enthalten: Sulfobernsteinsäurehalbester-Alkalisalze (hergestellt durch Umsetzen eines Polyglykolethers eines Kondensationsproduktes aus ($C_8$-$C_{12}$)-Alkylphenol und Formaldehyd mit Maleinsäureanhydrid und einem Alkalisulfit), Alkalisalze eines sulfogruppenhaltigen Kondensationsproduktes aus einem Phenol und Formaldehyd, Alkali-, Ammonium- oder Aminsalze von Alkylpolyglykoletherphosphat-Partialestern, Alkalisalze einer Ligninsulfonsäure im Gemisch mit gleichen Teilen eines quellfähigen Erdalkalisilicats, Salze von polymerisierten Alkyl-Naphthalin-Sulfonsäuren oder Salze von ethoxylierten Alkylphenolnovolaken. Ferner können zusätzlich weitere übliche Formulierungshilfsmittel, wie Netzmittel, z.B. Na-Oleoyl-N-methyltaurid, Tridecylalkoholpolyglykolether, Entschäumer auf der Basis von Tributylphosphat oder auf Siliconbasis, Frostschutzmittel, wie z.B. Ethylenglykol, Propylenglykol, Glycerin, Alumosilikate mit Blattstruktur, wie Montmorillonite oder Bentonite, Safener wie beispielsweise Harnstoff und übliche Konservierungsmittel wie Benzoesäure, Sobitansäure u.a. zugegeben werden.

Die erfindungsgemäßen Suspoemulsionen können beispielsweise folgende Wirkstoffkombinationen enthalten: Diclofopmethyl-Isoproturon, Pendimethalin-Chlortoluron,
Die wäßrige Phase enthält 0,1 bis 70 Gew.-% Wirkstoff, 0,5 bis 15 Gew.-% Dispergiermittel, 0,1 bis 15 Gew.-% Netzmittel, 0,1 bis 5 Gew.-% Entschäumer, 1,0 bis 15 Gew.-% Frostschutzmittel und 0,01 bis 4 Gew.-% Alumosilikate.

In der organischen Phase, die die schon zitierten Lösungsmittel einzeln oder in Mischungen enthält, liegen die Wirkstoffe in gelöster Form vor. Es sind 0,1 bis 90 Gew.-% Wirkstoff, 0,1 bis 35 Gew.-% Tensid, speziell jedoch 1,0 bis 10,0 Gew.-% und 2 bis 90 Gew.-% Lösungsmittel enthalten.

Das Verhältnis von wäßriger Phase zu organischer Phase kann je nach den Bedingungen in weiten Grenzen zwischen 100 : 1 und 1 : 100 variieren.

Bei Applikation als wäßrige Suspensionskonzentrate liegt das Verhältnis von wäßriger, dispergierter Phase zu organischer Phase im allgemeinen zwischen 1 : 1 und 100 : 1, vorzugsweise jedoch bei 1 : 1 bis 20 : 1. Im Falle einer ULV-Applikation beträgt das Verhältnis wäßrige Phase zu organischer Phase 1 : 1 bis 1 : 100, vorzugsweise jedoch 2 : 3 bis 1 : 20.
Hierbei ist dann die organische Phase (Öl) Trägerphase, in der die wäßrige Phase, die den (die) dort in fester Form suspendierten Wirkstoff(e) enthält, als fein verteilte Tröpfchen vorliegt.

Die wäßrigen Dispersionsformulierungen werden in der bekannten Weise durch Naßvermahlung mittels Perl-, Kugel-, Sand- oder Kolloid- bzw. Korundscheibenmühlen hergestellt.

Die Wirkstoffe und Tenside der organischen Phase werden im Lösungsmittel unter Rühren und eventuell Erwärmen und anschließendem Abkühlen gelöst.

Die wäßrige, disperse Phase und die organische, Tensid(e) und Wirkstoff(e) enthaltende Phase werden in bekannter Weise (z.B. nach EP-A 117 999) hohen Scherkräften, d.h. Scherkräften von 1 - 7000 $sec^{-1}$, ausgesetzt, wobei die gewünschten lagerstabilen Suspoemulsionen erhalten werden.

Die Erfindung wird durch nachstehende Beispiele erläutert.

Tabelle 1

Formulierungsbeispiele (Angaben der Bestandteile in Gew.-%)

| | 1 | 2 | 3 | 4 | 5 | 6 | 7 | 8 | 9 | 10 | 11 | 12 | 13 |
|---|---|---|---|---|---|---|---|---|---|---|---|---|---|
| Isoproturon Disp. | 40 | 40 | 40 | 67 | 75 | 54 | 37 | 91 | 91 | 72,5 | 40 | 48,5 | |
| Linuron Disp. | | | | | | | | | | | | | 31,5 |
| Trifluralin | 18 | 18 | 18 | | | | 16 | | | | 18 | | |
| Fluroxypyr | | | | | 7,2 | 4 | | | | 4,6 | | | |
| EL 107 | | | | | | | | | | | 1,5 | | |
| RH 8301 | | | | | | | | 1,4 | | | | | |
| Pendimethalin | | | | 9 | | | 7,5 | | | | | | |
| Alachlor | | | | | | | | | | | | | 31,2 |
| Bromoxyniloctanoat | | | | | | 4,6 | | | | | | | |
| Ioxyniloctanoat | | | | | | 4,2 | | | | | | | |
| Dinoseb(acetat) | | | | | | | | | | | | 38,5 | |
| Dioctylphthalat | | 28 | | 20 | | | | | 3,3 | 10 | 25 | | |
| ®Solvesso 100 | | | | | 14,3 | | | | | 5 | | 10,5 | |
| ®Solvesso 150 | 28 | | 28 | | | 15 | 26,7 | 6,6 | 3,3 | | 5 | | |
| Xylol | | | | | | | | | | | | | 24,2 |
| Hoe S 3510 | | 4 | 4 | 4 | | | | | | | 2,5 | | 4 |
| Hoe S 1816 | | | | | 2,5 | 1 | | 1 | | 1 | | 2,5 | |
| HOE S 1816-1 | 2,5 | | | | | | | | | | | | |
| Hoe S 3474 | | | | | | | 2,5 | | | | | | |
| ®Soprophor BSU | | | | | | | | | 1 | | | | |
| Wasser ad 100 | | | | | | | | | | | | | |

Tabelle 1 (Fortsetzung)

Formulierungsbeispiele (Angaben der Bestandteile in Gew.-%)

| | 14 | 15 | 16 | 17 | 18 |
|---|---|---|---|---|---|
| Linuron Disp. | 31,5 | 31,5 | 31,5 | 31,5 | 39,5 |
| Monolinuron | | | | | 15,6 |
| Alachlor | 31,2 | 31,2 | 31,2 | | |
| Metolachlor | | | | 31,2 | |
| Dioctylphthalat | | | | | |
| 1/2 Methylnaphthalin | | | | | |
| Xylol | 24,2 | 24,2 | 24,2 | 24,2 | 5 |
| Isophoron | | | | | 26,4 |
| Hoe S 3510 | | | | | 5,7 |
| Hoe S 1816 | 4 | | | | |
| HOE S 1816-1 | | 4 | | | |
| Hoe S 3474 | | | 4 | | |
| RSoprophor BSU | | | | 4 | |
| Wasser ad 100 | | | | | |

Tabelle 1 (Fortsetzung)

Formulierungsbeispiele (Angaben der Bestandteile in Gew.-%)

| | 19 | 20 | 21 | 22 | 23 |
|---|---|---|---|---|---|
| Isoproturon Disp. | 30 | | | | |
| Linuron Disp. | | 31,6 | 30 | 30,5 | 30,5 |
| Monolinuron | | | | | 5 |
| Alachlor | | 30 | | | |
| Metolachlor | | | | 30 | |
| Dioctylphthalat | 60 | 27 | 60 | 27 | 50 |
| 1/2 Methylnaphtalin | | | | | |
| ®Solvesso 200 | | | | | |
| Xylol | | | | | |
| HOE S 3510 | 5 | 4 | 4 | 4 | 4 |
| Hoe S 1816 | | | | | |
| HOE S 3618 | | | | | |
| Wasser ad 100 | | | | | |

Tabelle 1 (Fortsetzung)

Formulierungsbeispiele (Angaben der Bestandteile in Gew.-%)

| | 24 | 25 | 26 | 27 | 28 | 29 | 30 |
|---|---|---|---|---|---|---|---|
| Isoproturon Disp. | 40 | 40 | 40 | 40 | 40 | 40 | |
| Chlortoluron Disp. | | | | | | | 30 |
| Diclofop-methyl | | | | | | 10 | |
| Trifluralin | 18 | 18 | | 10 | 15 | | |
| Pendimethalin | | | 18 | 8 | | | |
| Dioctylphthalat | | | | | | | 60 |
| 1/2 Methylnaphtalin | | | | | | | |
| ®Solvesso 150 | 33 | 33 | 33 | 33 | 35 | | |
| Xylol | | | | | | 45 | |
| HOE S 3510 | 2,5 | 5 | 2,5 | 5 | | | 5 |
| Hoe S 1816 | | | | | 5 | | |
| Wasser ad 100 | | | | | | | |

Tabelle 2 (Vergleichsbeispiele)

Isoproturon: Trifluralin ≙ 200 : 200 g/l

| | Viskosität [mPa.s] | | Tröpfchengrößendurchmesser [µm] | | | Rezeptur |
|---|---|---|---|---|---|---|
| | 112 [U/min] | 13 [U/min] | 50 % | 75 % | 90 % | |
| I | 315 | 732 | 12,5 | 17,5 | 20,0 | gemäß |
| | 348 | 835 | 5,0 | 9,0 | 27,0 | Beispiel 1 |
| | 343 | 860 | 3,4 | 8,0 | 16,0 | |
| | 287 | 570 | 2,2 | 4,0 | 7,0 | |
| | 311 | 680 | 2,0 | 3,5 | 8,5 | |
| II | 660 | 1702 | 5,3 | 6,6 | 7,6 | gemäß |
| | 648 | 1686 | 3,8 | 4,0 | 5,5 | Beispiel 2 |
| | 660 | 1586 | 2,9 | 3,7 | 4,8 | |
| | 592 | 1442 | 2,65 | 2,95 | 3,6 | |
| | 653 | 1570 | 1,95 | 2,2 | 2,6 | |
| | 641 | 1678 | 1,55 | 1,95 | 3,0 | |
| III | 247 | 702 | 5,5 | 14,0 | 85,0 | gemäß |
| | 249 | 737 | 3,05 | 4,7 | 9,0 | Beispiel 3 |
| | 239 | 665 | 2,5 | 3,7 | 7,8 | |
| | 233 | 634 | 2,0 | 2,6 | 3,6 | |
| IV | 434 | 1058 | 13,5 | 15,7 | 18,5 | gemäß |
| | 494 | 1152 | 2,95 | 3,6 | 4,4 | EP-A 117 999 |
| | 533 | 1326 | 1,85 | 2,05 | 2,2 | Beispiel 1 |
| | 549 | 1431 | 1,35 | 1,65 | 1,85 | |
| | 621 | 1669 | < 1 | 1,55 | 1,75 | |
| | 668 | 1814 | < 1 | 1,35 | 1,65 | |

Wie Tabelle 2 zeigt, besitzen die erfindungsgemäßen Suspoemulsionen trotz großer Tröpfchenzahl und geringer Tröpchengröße gleichbleibendes Viskositätsverhalten, im Gegensatz zu den bekannten Suspoemulsionen gemäß EP-A 117 999.

**Patentansprüche**

**Patentansprüche für folgende Vertragsstaaten : AT, BE, CH, DE, FR, GB, IT, LI, NL, SE**

**1.** Pflanzenschutzmittel auf der Basis wäßrige und organische Phasen enthaltender Suspoemulsionen mit mindestens zwei Wirkstoffen,

deren organische Phase mindestens ein Lösungsmittel ausgewählt aus der aus aromatischen Kohlenwasserstoffe, ($C_6$-$C_{16}$)-Aromatengemischen, nicht wassermischbaren Ketonen, substituierten Aromaten und ($C_1$-$C_{16}$)-Phthalsäureestern bestehenden Gruppe,

als Tenside Ethylenoxid-Propylenoxid-Blockpolymere der Formeln I oder II

$$RO-(CH_2-CH_2-O)_x-(\underset{CH_3}{\underset{|}{CH}}-CH_2-O)_z-R \qquad (I)$$

$$RO-(CH_2-CH_2-O)_x-(\underset{CH_3}{\underset{|}{CH}}-CH_2-O)_y-(CH_2-CH_2-O)_z-R \qquad (II)$$

mit einem Molgewicht von 1000 - 20000, wobei jeweils x, y und z unabhängig voneinander eine Zahl von 2 - 200 und R = H oder ($C_1$-$C_{10}$)-Alkyl bedeuten, oder tristyrylsubstituierte Phenole mit 15 - 30 Mol EO und

als Wirkstoff mindestens einen in organischen Lösungsmitteln löslichen Wirkstoff aus der Gruppe der Phenylharnstoffderivate, der Anilinderivate, der Phosphorsäureester, der (Hetero-)arlyoxyphenoxyester, der substituierten Phenoxyessig(propion)-säuren oder -ester, der fungiziden Triazole, der Pyrethroide, der Imidazolcarboxamide, der 3,5-Dihalogen-4-hydroxybenzonitrile, der Phenolderivate, Ethyl-[3-(2-Chlor-4-trifluormethylphenoxy)-6-nitrobenzoyloxy]-acetat, N-[3-(1-Ethyl-1-methylpropyl)-5-isoxazolyl]-2,6-dimethoxybenzamidsäureester, [4-Amino-3,5-dichlor-6-fluor-2-pyridin]-oxyessigsäureester enthält und

deren wäßrige Phase ein Phenylharnstoffderivat aus der Gruppe Linuron, Isoproturon, Diuron und Chlortoluron oder ein Gemisch derselben enthält.

2. Pflanzenschutzmittel gemäß Anspruch 1, welche als Tensid eine Verbindung der Formel II enthalten, worin x und z die gleiche Bedeutung haben.

3. Pflanzenschutzmittel gemäß Anspruch 1 oder 2, deren organische Phase einen oder mehrere Wirkstoffe aus der Gruppe Monolinuron, Trifluralin, Pendimethalin, Alachlor, Metolachlor, Pyrazophos, Fluazifop, Fenoxapropethyl, Diclofopmethyl, 2,4-D-Ester, MCPA-Ester, Propiconazol, Deltamethrin, Prochloraz, Bromoxyniloctanoat, loxyniloctanoat, Dinoseb oder Dinoseb-acetat enthält.

4. Pflanzenschutzmittel gemäß einem der Ansprüche 1 bis 3, deren wäßrige Phase 0,1 bis 70 Gew.-.% Wirkstoff und deren organische Phase 0,1 bis 90 Gew.-% Wirkstoffe enthält.

5. Pflanzenschutzmittel gemäß einem der Ansprüche 1 bis 4, deren organische Phase 0,1 bis 35 Gew.-% Tensid enthält.

6. Pflanzenschutzmittel gemäß einem der Ansprüche 1 bis 7, deren organische Phase 2 bis 90 Gew.-% Lösungsmittel enthält.

**Patentansprüche für folgenden Vertragsstaat : ES**

1. Verfahren zur Herstellung eines Pflanzenschutzmittels auf der Basis wäßrige und organische Phasen enthaltender Suspoemulsionen mit mindestens zwei Wirkstoffen,
deren organische Phase mindestens ein Lösungsmittel ausgewählt aus der aus aromatischen Kohlenwasserstoffe, ($C_6$-$C_{16}$)-Aromatengemischen, nicht wassermischbaren Ketonen, substituierten Aromaten und ($C_1$-$C_{16}$)-Phthalsäureestern bestehenden Gruppe,
als Tenside Ethylenoxid-Propylenoxid-Blockpolymere der Formeln I oder II

$$RO-(CH_2-CH_2-O)_x-(\underset{\displaystyle CH_3}{\underset{|}{CH}}-CH_2-O)_z-R \qquad (I)$$

$$RO-(CH_2-CH_2-O)_x-(\underset{\displaystyle CH_3}{\underset{|}{CH}}-CH_2-O)_y-(CH_2-CH_2-O)_z-R \qquad (II)$$

mit einem Molgewicht von 1000 - 20000, wobei jeweils x, y und z unabhängig voneinander eine Zahl von 2 - 200 und R = H oder ($C_1$-$C_{10}$)-Alkyl bedeuten, oder tristyrylsubstituierte Phenole mit 15 - 30 Mol EO und

als Wirkstoff mindestens einen in organischen Lösungsmitteln löslichen Wirkstoff aus der Gruppe der Phenylharnstoffderivate, der Anilinderivate, der Phosphorsäureester, der (Hetero-)Arlyoxyphenoxyester, der substituierten Phenoxyessig(propion)-säuren oder -ester, der fungiziden Triazole, der Pyrethroide, der Imidazolcarboxamide, der 3,5-Dihalogen-4-hydroxybenzonitrile, der Phenolderivate, Ethyl-[3-(2-Chlor-4-trifluormethylphenoxy)-6-nitrobenzoyloxy]-acetat, N-[3-(1-Ethyl-1-methylpropyl)-5-isoxazolyl]-2,6-dimethoxybenzamidsäureester, [4-Amino-3,5-dichlor-6-fluor-2-pyridin]-oxyessigsäureester enthält und

deren wäßrige Phase ein Phenylharnstoffderivat aus der Gruppe Linuron, Isoproturon, Diuron und Chlortoluron oder ein Gemisch derselben enthält, dadurch gekennzeichnet, daß man die wäßrige, disperse Phase und die organische, Tensid(e) und Wirkstoffe enthaltende Phase hohen Scherkräften aussetzt.

**2.** Verfahren gemäß Anspruch 1, dadurch gekennzeichnet, daß Pflanzenschutzmittel hergestellt werden, welche als Tensid eine Verbindung der Formel II enthalten, worin x und z die gleiche Bedeutung haben.

**3.** Verfahren gemäß Anspruch 1 oder 2, dadurch gekennzeichnet, daß Pflanzenschutzmittel hergestellt werden, deren organische Phase einen oder mehrere Wirkstoffe aus der Gruppe Monolinuron, Trifluralin, Pendimethalin, Alachlor, Metolachlor, Pyrazophos, Fluazifop, Fenoxapropethyl, Diclofopmethyl, 2,4-D-Ester, MCPA-Ester, Propiconazol, Deltamethrin, Prochloraz, Bromoxyniloctanoat, loxyniloctanoat, Dinoseb oder Dinoseb-acetat enthält.

**4.** Verfahren gemäß einem der Ansprüche 1 bis 3, dadurch gekennzeichnet, daß Pflanzenschutzmittel hergestellt werden, deren wäßrige Phase 0,1 bis 70 Gew.-% Wirkstoff und deren organische Phase 0,1 bis 90 Gew.-% Wirkstoff enthält.

**5.** Verfahren gemäß einem der Ansprüche 1 bis 4, dadurch gekennzeichnet, daß Pflanzenschutzmittel hergestellt werden, deren organische Phase 0,1 bis 35 Gew.-% Tensid enthält.

**6.** Verfahren gemäß einem der Ansprüche 1 bis 7, dadurch gekennzeichnet, daß Pflanzenschutzmittel hergestellt werden, deren organische Phase 2 bis 90 Gew.-% Lösungsmittel enthält.

## Claims

**Claims for the following Contracting States : AT, BE, CH, DE, FR, GB, IT, LI, NL, SE**

**1.** A plant-protection agent which is based on suspo-emulsions containing aqueous and organic phases and which contains at least two active ingredients,

wherein the organic phase contains at least one solvent selected from the group consisting of aromatic hydrocarbons, ($C_6$-$C_{16}$)-aromatic mixtures, water-immiscible ketones, substituted aromatics and ($C_1$-$C_{16}$)-phthalic acid esters,

as surfactants, ethylene oxide-propylene oxide block polymers of the formula I or II

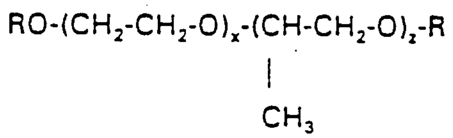 (I)

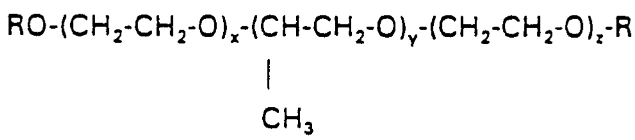 (II)

having a molecular weight of 1,000-20,000, where in each case x, y and z, independently of one another, are a number from 2 to 200 and R is H or ($C_1$-$C_{10}$)-alkyl, or tristyryl-substituted phenols containing 15-30 mol of EO, and
as active ingredient, at least one active ingredient which is soluble in organic solvents, from the group consisting of phenylurea derivatives, aniline derivatives, phosphoric acid esters, (hetero)-aryloxyophenoxy esters, substituted phenoxyacetic (-propionic) acids or esters, fungicidal triazoles, pyrethroids, imidazolecarboxamides, 3,5-dihalo-4-hydroxybenzonitriles, phenol derivatives, ethyl [3-(2-chloro-4-trifluoromethylphenoxy)-6-nitrobenzoyloxy]acetate, N-[3-(1-ethyl-]-methyl-propyl)-5-isoxazolyl]-2,6-dimethoxybenzamidates and [4-amino-3,5-dichloro-6-fluoro-2-pyridine]oxyacetic acid esters, and
wherein the aqueous phase contains a phenylurea derivative from the group consisting of linuron, isoproturon, diuron and chlorturon, or a mixture thereof.

**2.** A plant protection agent as claimed in claim 1, wherein it contains, as surfactant, a compound of the formula II in which x and z have the same meaning.

**3.** A plant-protection agent as claimed in claim 1 or 2, wherein the organic phase contains one or more active ingredients from the group consisting of monolinuron, trifluralin, pendimethalin, alachlor, metolachlor, pyrazophos, fluazifop, fenoxapropethyl, diclofop-methyl, 2,4-D esters, MCPA esters, propiconazole, deltamethrin, prochloraz, bromoxynil octanoate, ioxynil octanoate, dinoseb or dinoseb acetate.

**4.** A plant-protection agent as claimed in one of claims 1 to 4, wherein the aqueous phase contains 0,1 to 70% by weight of active ingredient and the organic phase contains 0.1 to 90% by weight of active ingredients.

**5.** A plant-protection agent as claimed in one of claims 1 to 4, wherein the organic phase contains 0.1 to 35% by weight of surfactant.

**6.** A plant-protection agent as claimed in one of claims 1 to 5, wherein the organic phase contains 2 to 90% by weight of solvent.

**Claims for the following Contracting State : ES**

**1.** A process for the production of a plant-protection agent which is based on suspo-emulsions containing aqueous and organic phases and which contains at least two active ingredients,
wherein the organic phase contains at least one solvent selected from the group consisting of aromatic hydrocarbons, ($C_6$-$C_{16}$)-aromatic mixtures, water-immiscible ketones, substituted aromatics and ($C_1$-$C_{16}$)-phthalic acid esters,
as surfactants, ethylene oxide-propylene oxide block polymers of the formula I or II

$$RO-(CH_2-CH_2-O)_x-(CH-CH_2-O)_z-R \qquad (I)$$
|
$CH_3$

$$RO-(CH_2-CH_2-O)_x-(CH-CH_2-O)_y-(CH_2-CH_2-O)_z-R \qquad (II)$$
|
$CH_3$

having a molecular weight of 1,000-20,000, where in each case x, y and z, independently of one another, are a number from 2 to 200 and R is H or ($C_1$-$C_{10}$)-alkyl, or tristyryl-substituted phenols containing 15-30 mol of EO, and as active ingredient, at least one active ingredient which is soluble in organic solvents, from the group consisting of phenylurea derivatives, aniline derivatives, phosphoric acid eaters, (hetero)-aryloxyophenoxy esters, substituted phenoxyacetic (-propionic) acids or eaters, fungicidal triazoles, pyrethroids, imidazolecarboxamides, 3,5-dihalo-4-hydroxybenzonitriles, phenol derivatives, ethyl [3-(2-chloro-4-trifluoromethylphenoxy)-6-nitrobenzoyloxy]acetate, N-[-3-(1-ethyl-1-methylpropyl)-5-isoxazolyl]-2,6-dimethoxy-benzamidates and [4-amino-3,5-dichloro-6-fluoro-2-pyridine]-oxyacetic acid esters, and
wherein the aqueous phase contains a phenylurea derivative from the group consisting of linuron, isoproturon, diuron and chlorturon, or a mixture thereof, which comprises subjecting the aqueous, disperse phases and the organic, surfactant- and active ingredient-containing phase to high shear forces.

**2.** The process as claimed in claim 1, wherein a plant-protection agent is produced which contains, as surfactant, a compound of the formula II in which x and z have the same meaning.

**3.** The process as claimed in claim 1 or 2, wherein a plant-protection agent is produced wherein the organic phase contains one or more active ingredients from the group consisting of monolinuron, trifluralin, pendimethalin, alachlor, metolachlor, pyrazophos, fluazifop, fenoxaprop-ethyl, diclofop-methyl, 2,4-D esters, MCPA esters, propiconazole, deltamethrin, prochloraz, bromoxynil octanoate, ioxynil octanoate, dinoseb or dinoseb acetate.

**4.** The process as claimed in one of claims 1 to 3, wherein a plant-protection agent is produced wherein the aqueous phase contains 0.1 to 70% by weight of active ingredient and the organic phase contains 0.1 to 90% by weight of active ingredient.

**5.** The process as clained in one of claims 1 to 4, wherein a plant-protection agent is produced wherein the organic phase contains 0.1 to 35% by weight of surfactant.

**6.** The process as claimed in one of claims 1 to 5, wherein a plant-protection agent is produced wherein the organic phase contains 2 to 90% by weight of solvent.

**Revendications**
**Revendications pour les Etats contractants suivants : AT, BE, CH, DE, FR, GB, IT, LI, NL, SE**

**1.** Produits phytosanitaires à base de suspoémulsions contenant une phase organique et une phase aqueuse, avec au moins deux matières actives, dont la phase organique contient au moins un solvant choisi parmi l'ensemble comprenant les hydrocarbures aromatiques, les mélanges de substances aromatiques en $C_6$ à $C_{16}$, les cétones non miscibles à l'eau, les composés aromatiques substitués et les phtalates en $C_1$ à $C_{16}$,
comme tensioactifs, des polymères séquencés d'oxyde d'éthylène, ayant les formules I ou II :

$$RO-(CH_2-CH_2-O)_x-(\underset{\displaystyle CH_3}{\underset{|}{CH}}-CH_2-O)_z-R \qquad (I)$$

$$RO-(CH_2-CH_2-O)_x-(CH-CH_2-O)_y-(CH_2-CH_2-O)_z-R \qquad (II)$$

ayant une masse moléculaire de 1000 à 20 000, où chacun des indices x, y et z, indépendamment l'un de l'autre, est un nombre compris entre 2 et 200 , et R est H ou un radical alkyle en $C_1$ à $C_{10}$, ou bien des phénols tristyrylés ayant de 15 à 30 moles d'oxyde d'éthylène, et,

comme matière active, au moins une matière active soluble dans les solvants organiques, choisie parmi l'ensemble comprenant les dérivés de la phénylurée, les dérivés de l'aniline, les phosphates, les (hétéro)aryloxyphénoxyesters, les acides phénoxyacéto (propioniques) substitués ou leurs esters, les triazoles fongicides, les pyréthroïdes, les imidazolecarboxamides, les 3,5-dihalogéno-4-hydroxybenzonitriles, les dérivés du phénol, le [3-(2-chloro-4-trifluorométhylphénoxy)-6-nitrobenzoyloxy]-acétate d'éthyle, les esters de l'acide N-[3-(1-éthyl-1-méthylpropyl)-5-isoxazolyl]-2,6-di-méthoxybenzamidique, les esters de l'acide [4-amino-3,5-dichloro-6-fluoro-2-pyridine]-oxyacétique, et dont la phase aqueuse contient un dérivé de la phénylurée choisi parmi l'ensemble comprenant le linuron, l'isoproturon, le diuron, le chlortoluron ou un de leurs mélanges.

**2.** Produits phytosanitaires selon la revendication 1, qui, contiennent comme tensioactif, un composé de formule II, dans laquelle x et z ont les mêmes significations.

**3.** Produits phytosanitaires selon la revendication 1 ou 2, dont la phase organique contient une ou plusieurs matières actives choisies parmi l'ensemble comprenant le monolinuron, la trifluraline, la pendiméthaline, l'alachlor, le métolachlor, le pyrazophos, le fluazifop, le fénoxapropéthyl, le diclofopméthyl, le 2,4-D-ester, le MCPA-ester, le propiconazol, la deltaméthrine, le prochloraz, l'octanoate de bromoxynil, l'octanoate d'ioxynil, le dinozèbe ou l'acétate de dinozèbe.

**4.** Produits phytosanitaires selon l'une des revendications 1 à 3, dont la phase aqueuse contient de 0,1 à 70 % en poids de matière active et dont la phase organique contient de 0,1 à 90 % en poids de matières actives.

**5.** Produits phytosanitaires selon l'une des revendications 1 à 4, dont la phase organique contient de 0,1 à 35 % en poids d'un tensioactif.

**6.** Produit phytosanitaire selon l'une des revendications 1 à 7, dont la phase organique contient de 2 à 90 % en poids d'un solvant.

**Revendications pour l'Etat contractant suivant : ES**

**1.** Procédé pour préparer un produit phytosanitaire à base de suspoémulsions contenant une phase organique et une phase aqueuse, avec au moins deux matières actives, dont la phase organique contient au moins un solvant choisi parmi l'ensemble comprenant les hydrocarbures aromatiques, les mélanges de substances aromatiques en $C_6$ à $C_{16}$, les cétones non miscibles à l'eau, les composés aromatiques substitués et les phtalates en $C_1$ à $C_{16}$,

comme tensioactifs, des polymères séquencés d'oxyde d'éthylène, ayant les formules I ou II :

$$RO-(CH_2-CH_2-O)_x-(\underset{\displaystyle CH_3}{\underset{|}{CH}}-CH_2-O)_z-R \qquad (I)$$

$$RO-(CH_2-CH_2-O)_x-(CH-CH_2-O)_y-(CH_2-CH_2-O)_z-R \qquad (II)$$

ayant une masse moléculaire de 1000 à 20 000, où chacun des indices x, y et z, indépendamment l'un de l'autre, est un nombre compris entre 2 et 200 , et R est H ou un radical alkyle en $C_1$ à $C_{10}$, ou bien des phénols tristyrylés ayant de 15 à 30 moles d'oxyde d'éthylène, et,

comme matière active, au moins une matière active soluble dans les solvants organiques, choisie parmi l'ensemble comprenant les dérivés de la phénylurée, les dérivés de l'aniline, les phosphates, les (hétéro)aryl-oxyphénoxyesters, les acides phénoxyacéto (propioniques) substitués ou leurs esters, les triazoles fongicides, les pyréthroïdes, les imidazolecarboxamides, les 3,5-dihalogéno-4-hydroxybenzonitriles, les dérivés du phénol, le [3-(2-chloro-4-trifluorométhylphénoxy)-6-nitrobenzoyloxy]-acétate d'éthyle, les esters de l'acide N-[3-(1-éthyl-1-méthylpropyl)-5-isoxazolyl]-2,6-di-méthoxybenzamidique, les esters de l'acide [4-amino-3,5-dichloro-6-fluoro-2-pyridine]-oxyacétique, et dont la phase aqueuse contient un dérivé de la phénylurée choisi parmi l'ensemble comprenant le linuron, l'isoproturon, le diuron, le chlortoluron ou un de leurs mélanges, caractérisé en ce qu'on expose la phase dispersée aqueuse et la phase organique contenant le ou les tensioactifs et la ou les matières actives à des forces de cisaillement intenses.

**2.** Procédé selon la revendication 1, caractérisé en ce que l'on prépare des produits phytosanitaires qui contiennent comme tensioactif un composé de formule II dans laquelle x et y ont les mêmes significations.

**3.** Procédé selon la revendication 1 ou 2, caractérisé en ce qu'on prépare des produits phytosanitaires, dont la phase organique contient une ou plusieurs matières actives choisies parmi l'ensemble comprenant le monolinuron, la trifluraline, la pendiméthaline, l'alachlor, le métolachlor, le pyrazophos, le fluazifop, le fénoxapropéthyl, le diclofopméthyl, le 2,4-D-ester, le MCPA-ester, le propiconazol, la deltaméthrine, le prochloraz, l'octanoate de bromoxynil, l'octanoate d'ioxynil, le dinozèbe ou l'acétate de dinozèbe.

**4.** Procédé selon l'une des revendications 1 à 3, caractérisé en ce qu'on prépare des produits phytosanitaires dont la phase aqueuse contient de 0,1 à 70 % en poids d'une matière active et dont la phase organique contient de 0,1 à 90 % en poids d'une matière active.

**5.** Procédé selon l'une des revendications 1 à 4, caractérisé en ce que l'on prépare des produits phytosanitaires dont la phase organique contient de 0,1 à 35 % en poids d'un tensioactif.

**6.** Procédé selon l'une des revendications 1 à 7, caractérisé en ce qu'on prépare des produits phytosanitaires dont la phase organique contient de 2 à 90 % en poids d'un solvant.